# EUROPEAN PATENT APPLICATION

(11) **EP 1 593 655 A1**
(43) Date of publication of application: **09.11.2005**
(21) Application number: 03811483.1
(22) Date of filing: 07.08.2003
(51) Int. Cl.: C02F 1/68

(54) **WATER HAVING VIBRATION INFORMATION RECORDED THEREIN**

(30) Priority: 15.11.2002 JP 2002369039
(71) Applicant: Lidic Inc., Osaka-shi, Osaka 534-0025 (JP)
(72) Inventor: ODA, Shinichi, c/o Lidic Inc., Miyakojima-ku, Osaka-shi, Osaka 534-0025 (JP)
(74) Representative: Dunleavy, Kevin James
(86) International application number: PCT/JP2003/010122
(87) International publication number: WO 2004/046047

(57) **Abstract**

A water having information on vibration recorded therein, **characterized in that** it is produced by a method comprising immersing on ore containing a Fe compound in purified water for a specific period of time to prepare a Fe compound contact water, and then adding the Fe compound contact water and a chemical salt to a specific amount of purified water in specific ratios for dilution, followed by agitation. The water having information on vibration recorded therein serves as a medium for recording information on vibration precisely and stably for a long period of time, and can be commercially produced on a mass-production scale.

## Description

### FIELD OF THE INVENTION

The present invention relates to oscillation data recording water, which is usable as an oscillation data recording medium for recording oscillation data intrinsic to any material (including animate objects) and concurrently being usable for stably preserving the recorded data for a long duration.

### BACKGROUND OF THE INVENTION

For many years, there has existed the idea of enabling water to internally retain data designating the properties of materials so as to apply the retained data and information to medical treatment practices. As an outstanding example, the "Homeopathy" medical treatment originated by Samuel Hahnnemann, a German physician, in the early 19th century, is well known. In recent years, there has especially been an increasing number of physicians practically applying the Homeopathy medical treatment.

The basic concepts of the Homeopathy treatment are described as follows.

For example, after diluting solution extracted from a certain medical herb with water for repeated rounds, the molecules of the herb will disappear statistically before long, and only data designating the properties of the herb will remain in the water. After administering the water diluted solution to a patient, specific effects analogous to that of the herb will soon be generated in the patient's body.

The above aqueous properties of the herb have been proven by a large number of clinical data resulting from Homeopathy medical treatments accumulated during the past 2 centuries.

There are a variety of theoretical explanations regarding the substance of this clinical data. However, from a common viewpoint generally, the majority of scientists favor the opinion that the effects of the Homeopathy medical treatment correspond to "oscillation generated at electronic levels" present in materials or animate objects.
(Note that the said data will be referred to as "oscillation data" hereinafter.)

A technology based on the idea of controlling the oscillation data by applying an electric device has existed for many years. As a typical example, there is a diagnostic treatment device called an EAV (Electronic Acupuncture according to Dr. Voll), which use has spread in Germany and also in peripheral countries since the 1950's.

A variety of the above EAV devices have been developed in Germany to date, which have been operated practically in existing medical treatment locations. On the other hand, in the U.S.A., the Magnetic Resonance Analyzer (MRA) as another oscillation data measuring device derived from a technical background analogous to that of EAVs was developed by Ronald J. Weinstock in 1989. The MRA technology can be confirmed by referring to Japanese Patent Publication No. HEISEI-6-130008 (1994). Furthermore, as another technique for enabling water to internally record oscillation information, a "live body's data transferring device" is disclosed in Japanese Utility Model Publication No. 3010129.

Nevertheless, even after commencing operations of the above referred MRA device, as well as the latter live body's data transferring device, there exist remaining problems, as described below.

Concretely, when diagnosing a live body with the former MRA oscillation data measuring device, although accuracy can be secured to some extent, it has still been impracticable to strictly execute fixed point measurement operations.

The idea of applying water as a medium for recording oscillation data has also been introduced to Homeopathy medical treatment. Although it is practicable to execute fixed point measurements by enabling water to record oscillation data, through applying the latter live body's data transferring device, a technical problem still remains in terms of the capability of water to retain information. This is because, when applying water as a medium for recording oscillation data, although water concurrently exerts the capability for receiving, fixing, and propagating oscillation data, the capabilities for receiving and fixing oscillation data still remain unstable. It is well known that oscillation data once recorded in water is easily variable via passage of time and due to temperature variations and other external factors. Furthermore, when water reaches a boil, the retained data is totally lost.

Aside from water, it is well known that minerals and salt respectively contain important functions for transmitting oscillation data. Out of these, minerals are excellent in receiving capacity, whereas salt has properties for fixing the once received oscillation data.

Water in the natural environment such as fountains essentially contains a minute amount of minerals including sodium chloride. Thus, natural water is complete in that it is provided with the three important and essential factors of receiving, fixing, and transmission of oscillation data in water.

Nevertheless, due to the imbalanced distribution of minerals in natural water, it was confirmed via a variety of tests that there were deviations in the capacity of natural water for internally recording oscillation data. Hence, it was thus far regarded that natural water was incomplete and inadequate for constituting a recording medium for precisely recording oscillation data for analytical purposes or industrial applications.

Hence, the object of the present invention is to provide novel oscillation data recording water, which is capable of easily and securely preserving the actual conditions of a live body at a specific time as oscillation data for a long duration without varying the once recorded oscillation data. Essentially, the present invention has been achieved to fully solve the above problems, wherein the present invention produces the inventive oscillation data recording water usable as a medium for recording oscillation data, via a step of mixing, at a specific mixing ratio, sodium chloride with water in contact with Fe compound, gotten through causing minerals containing Fe compound to be held in contact with purified water for a predetermined duration, and an ensuing step of diluting and stirring the mixed water with purified water at a predetermined diluting ratio.

### SUMMARY OF THE INVENTION

The present invention provides a practical advantage by effectively applying the highly stable function of specific minerals containing Fe compound for the reception of oscillation data and by concurrently causing the effective influence of minerals containing Fe compound to be absorbed in water via contact with purified water for a predetermined duration, without causing its ingredients to be extracted into the purified water.

Furthermore, other than sodium chloride (NaCl), natural salt also contains miscellaneous mineral ingredients, and thus, in order to realize a strictly balanced arrangement of mineral ingredients, it is essential that genuine chemical salt totally devoid of any other mineral ingredients be used.

Hence, the present invention provides the advantage of stably receiving oscillation data by applying genuine chemical salt totally devoid of any other mineral ingredients, wherein the high-purity chemical salt comprises 99.98% purity NaCl conforming to the JIS-K8005 Specification as per the Japan Pharmacopoeia.

Furthermore, the present invention solely applies purified water independently of conventional city water or conventional natural water. This is because conventional city water has added to it chlorine for sterilization and disinfection, and still, a minimum amount of miscellaneous residual chemical materials still remain therein. Thus, city water is extremely unstable in the capability to receive and fix oscillation data.

Conventional mineral water is generated by boiling natural water so as to minimize residual germs, and thus, it still contains miscellaneous mineral ingredients therein. Due to this reason, it is by no means desirable to use city water and mineral water for constituting the oscillation data recording water related to the present invention.

Distilled water is produced by cooling off steam generated from boiled water via a distilling device. However, in the strict sense, it may be rather impossible to thoroughly eliminate unwanted mineral ingredients from the distilled water.

Hence, due to the above reasons, by solely applying purified water distilled from genuine pure water filtered through ion exchange resinous filters, the present invention provides an advantage by enabling a precisely balanced arrangement of minerals to be used.

### BRIEF DESCRIPTION OF THE DRAWINGS

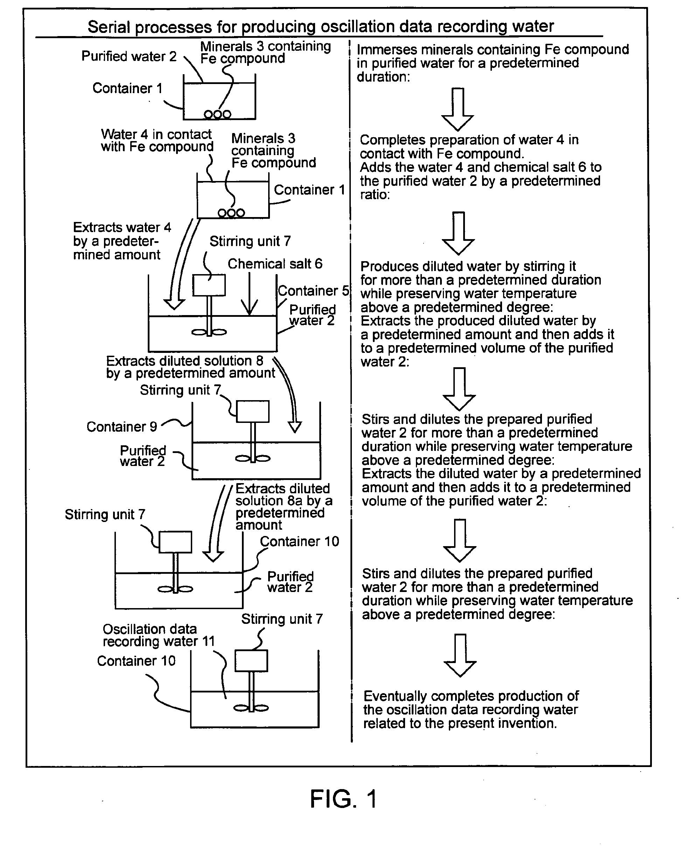

FIG. 1 is a schematic block diagram designating the serial steps for producing the novel oscillation data recording water according to the present invention.

### DETAILED DESCRIPTION OF THE PREFERRED EMBODIMENTS

Referring to the accompanying drawing, a typical form of producing the novel oscillation data recording water by implementing the present invention will be described in detail below.

FIG. 1 is a schematic block diagram, which sequentially describes the processes for producing the oscillation data recording water by implementing the present invention. The sequential processes are commenced by a step of producing water 4 in contact with Fe compound of minerals immersed in purified water 2.

When preparing the water 4 in contact with Fe compound of minerals immersed therein, initially, purified water 2 is fed into a compact container 1. Next, minerals 3 containing Fe compound are immersed in the purified water 2 in a naturally remaining condition for a long period. (Note that this embodiment uses reddish iron ores. In this case, it is essential that the surfaces of the reddish iron ores which contact the purified water 2 be ground into mirror polished surfaces in advance, in order to prevent the discharge of all types of excess minerals.)

In the above immersion process, it is so arranged that the reddish iron ores 3 each containing Fe compound therein by 30 to 70 grams are immersed into 1000 milliliter of the purified water 2 for a long duration ranging from 11 to 13 months.

As described above, by causing the reddish iron ores 3 each containing Fe compound therein to be immersed in the purified water 2 for a long duration, it is possible to produce water 4 in contact with Fe compound in a manner that makes it saturated with the effective influences of the Fe compound intrinsic to the above reddish iron ores 3.

Next, the purified water 2 in contact with the Fe compound is mixed with sodium chloride at a predetermined mixing ratio, followed by the process of diluting and stirring the solution with purified water 2 based on a predetermined ratio. In this case, first, the water 4 in contact with the Fe compound is extracted at an amount of 9 to 11 milliliters. Then, 10 grams of genuine chemical salt 6 is prepared with respect to the extracted amount, wherein the genuine chemical salt comprises 99.98% purity NaCl conforming to the JIS-K8005 Specification as per the Japan Pharmacopoeia.

Next, a container 5 is filled with 10000 milliliter of the purified water 2, and then the above-mentioned 9 to 11 milliliters of the pure water 4 in contact with the Fe compound and 10 grams of the genuine chemical salt 6 are added to the above purified water 2. Following this step, the prepared solution is stirred for more than 168 consecutive hours by operating a stirring unit 7 while maintaining a minimum of 35°C of water temperature.

After that, as described above, after being stirred for more than 168 consecutive hours at a temperature above 35°C, the prepared diluted solution 8 is extracted at an amount of 10 milliliters, and then added to 10000 milliliters of purified water 2 stored in a container 9. Then, the mixed solution is again stirred for more than 168 consecutive hours by operating the stirring unit 7 while maintaining a greater than 35°C of water temperature.

Next, 10 milliliters of the above diluted solution 8a is extracted again, which is then added to 10000 milliliters of purified water 2 stored in a container 10. The purified water 2 having the addition of 10 milliliters of the diluted solution is again stirred for more than 168 consecutive hours by operating the stirring unit 7 while maintaining a greater than 35°C of water temperature.

Consequently, 1 to 15 milliliters of the pure water 4 in contact with the Fe compound and 10 grams of the genuine chemical salt 6 have been diluted by a 10⁹ dilution ratio, thereby fully completing the production of the inventive oscillation data recording water 11.

Hence, in accordance with this novel oscillation data recording water 11, the present invention provides an advantage by effectively utilizing the highly stable function of the minerals 3 containing Fe compound for receiving oscillation data, and also by enabling the purified water 2 to be saturated with the effective influence of the minerals 3 containing Fe compound via contact with the Fe compound for a predetermined duration instead of causing the Fe ingredient to be extracted into the purified water.

Moreover, the novel oscillation data recording water 11 produced via the above sequential processes provides an advantage by enabling the reception of oscillation data under stable conditions by virtue of the use of a high-purity genuine chemical salt totally devoid of any other mineral ingredients.

Furthermore, the novel oscillation data recording water 11 produced via the above sequential processes provides an advantage by enabling the realization of a precisely balanced arrangement of minerals, through solely utilizing purified water, independent of conventional city water or natural water.

### Possible Applications in Industry

As described above, according to the inventive novel oscillation data recording water functioning as a medium for recording oscillation data therein, since the present invention has introduced a technology for producing the above oscillation data recording water by solely applying industrially produced purified water, genuine chemical salt, and minerals containing Fe compound, there is no possibility of incurring disadvantageous incidents otherwise caused by the mixture of impurities or deviated balances of minerals in this novel oscillation data recording water. This enables the oscillation data recording water to easily and securely preserve the actual conditions of a live body at a specific time for a long duration, without causing the once recorded oscillation data to vary, thereby making it possible for the present invention to easily and inexpensively produce an extremely high-quality oscillation data recording water on industrial and mass-volume bases.

## Claims

1. An oscillation data recording water, **characterized by**:
said water being a material mainly usable as a medium for recording oscillation data,
wherein said water is produced via a step of mixing, at a predetermined ratio, sodium chloride with a water contacted with Fe compound, obtained by holding minerals containing Fe compound in aqueous contact with purified water for a predetermined duration,
and executions of a step of diluting said mixed solution with purified water by a predetermined ratio and a step of stirring said mixed diluted.
